# EUROPÄISCHE PATENTSCHRIFT

(11) **EP 1 431 680 B1**
(45) Veröffentlichungstag und Bekanntmachung des Hinweises auf die Patenterteilung: **18.04.2007**
(21) Anmeldenummer: 02028691.0
(22) Anmeldetag: 21.12.2002
(51) Int. Cl.: F24F 13/28

(54) **Vorrichtung zum Festklemmen von Filterzellenrahmen an einem Rastersystem**
Clamping device for mounting filter frames on a grid system
Dispositif de serrage pour le montage des cadres de filtre sur un système de trame

(43) Veröffentlichungstag der Anmeldung: 23.06.2004
(73) Patentinhaber: Seven-Air Gebr. Meyer AG, 6285 Hitzkirch (CH)
(72) Erfinder: Felix, Urs, 6285 Hitzkirch (CH); Sommer, Paul, 6017 Ruswil (CH)
(74) Vertreter: Troesch Scheidegger Werner AG

(56) Entgegenhaltungen:
- WO-A-01/44608
- DE-A- 1 919 312
- DE-A- 19 707 598
- DE-A- 19 814 297
- DE-C- 3 801 135
- US-A- 3 552 704
- US-A- 3 581 478
- US-A- 4 688 835

## Beschreibung

Die vorliegende Erfindung betrifft eine Vorrichtung zum Positionieren und Befestigen eines Rahmenelementes oder eines Plattenelementes gemäss dem Oberbegriff nach Anspruch 1, eine Anordnung mit einer Vorrichtung, eine Verwendung der Anordnung für das Positionieren und Befestigen von Filterzellen sowie ein Verfahren zum Positionieren und Befestigen von Rahmenelementen oder Plattenelementen wie beispielsweise von Filterzellen.

Zum Reinigen des Luftstromes in Klimaanlagen werden sogenannte Filterzellen verwendet, wobei je nach Grösse der Anlage mehrere Zellen in einem Rastersystem angeordnet werden. Zum Spannen bzw. Befestigen der einzelnen Filterzellen werden nach wie vor klammerartige Klemmelemente verwendet. Dabei werden z.B. metallene Klemmbügel gegen den Rahmen der Filterzellen gespannt um diese zu befestigen resp. wieder zu lösen, damit der Rahmen mit dem Filter wieder entfernt werden kann beispielsweise zum Reinigen oder zum Ersetzen des Filters.

Derartige Klammern oder Bügel sind sehr unpraktisch bzw. deren Handling ist kompliziert, da sie leicht verschmutzen können. Zudem beeinträchtigen sie die Dichtung der Filter, da diese Klammern bzw. Bügel in der Regel gegen die Dichtungsbänder drücken.

In der US 3 581 478 wird eine Anordnung zum Festlegen bzw. Positionieren eines Luft- oder Gasfilterelementes an einem entsprechenden Rahmen beschrieben.

In der DE 198 14 297 wird ein Drehriegelverschluss beschrieben zum Einbau in Türen, mittels welchem Verschluss die Tür an einem festen Bauteil wie Beispielsweise einem Wandbereich spannbar festgelegt werden kann. Dabei erfolgt die Verspannung mittels eines das Bauteil hintergreifenden Riegels, welcher rückseitig auf das Bauteil drückt um so die Tür quasi auf das Bauteil zur Festlegung zu ziehen.

In der WO 001/44608 wird ein Verschluss zur Verbindung zweier dünner Wände beschrieben.

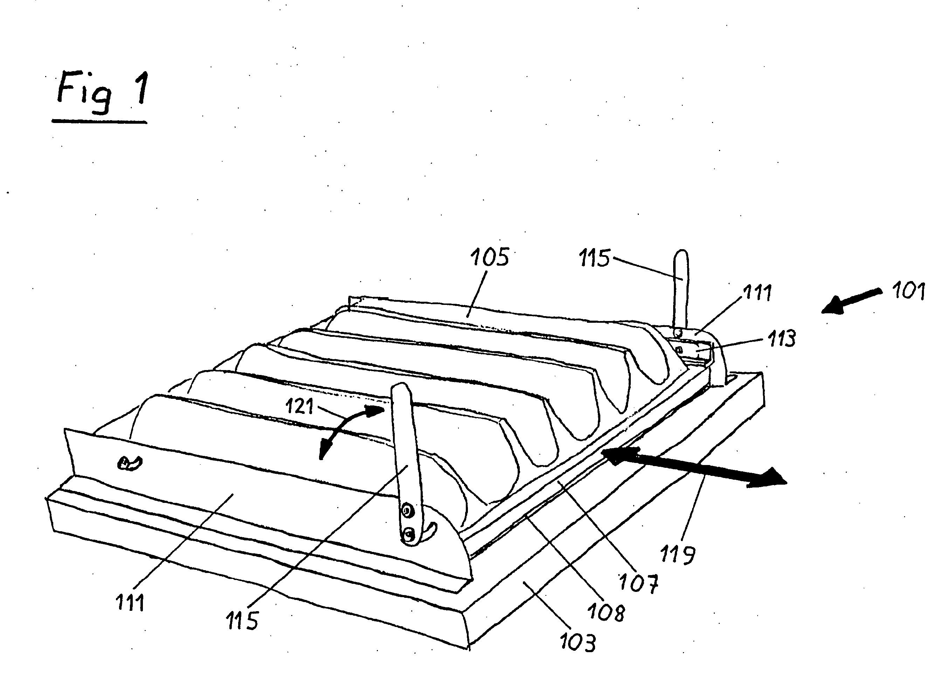

Als erste der Branche hat die Firma Seven-Air ein seitlich ausziehbares Filterzellensystem entwickelt und im Klimagerätebau eingeführt, wobei die einzelnen Filterzellen in Führungsschienen seitlich ausziehbar sind bzw. in den Führungsschienen eingeführt mittels hebelartigen Elementen gespannt bzw. festgepresst werden können. Für kleinere Anlagen hat sich dieses System bewährt, jedoch bei Grossanlagen mit Rastersystemen von mehreren Filterzellen kann dieses System nicht verwendet werden. Zudem müssen die einzelnen Filterzellen jeweils schmutzluftseitig angeordnet werden. Ein derartiges von der Firma Seven-Air entwickeltes Filterzellensystem mit seitlich einführbaren Filterzellen wird nachfolgend unter Bezug auf Figur 1 näher beschrieben.

Es ist eine Aufgabe der vorliegenden Erfindung, eine Vorrichtung bzw. eine Anordnung zu schaffen, insbesondere geeignet zum Positionieren und Befestigen von Filterzellen beispielsweise in einer Klimaanlage, welche die vorab beschriebenen Nachteile nicht aufweist und ein einfaches und dichtes Anordnen derartiger Filterzellen ermöglicht. Erfindungsgemäss wird die gestellte Aufgabe mittels einer Vorrichtung gemäss dem Wortlaut nach Anspruch 1 bzw. einer Anordnung gemäss dem Wortlaut nach Anspruch 5 gelöst.

Vorgeschlagen wird eine Vorrichtung zum Positionieren und Befestigen bzw. Spannen von einem oder mehrerer Rahmenelemente, welche ein Funktionselement, wie beispielsweise eine Filterzelle, ein feinmaschiges Gitter, eine Glasscheibe oder dergleichen aussen umgeben oder von einem oder mehrerer Plattenelemente. Weiter vorgeschlagen wird eine Anordnung aufweisend ein Rastersystem, wobei an oder in den einzelnen Öffnungen des Rasters die erwähnten Rahmenelemente oder Plattenelemente anzuordnen sind. Erfindungsgemäss zentrales Element ist eine Spann- oder Festlegeeinrichtung, welche vorzugsweise an den jeweiligen Kreuzungen des Rastersystems angeordnet ist. Die Spann-oder Festlegeeinrichtung besteht aus einem zentralen Haltestift, welcher mindestens eine Drehnut oder eine Positionier-bzw. Positionskulisse aufweist, welche sich entlang eines Abschnittes des Haltestiftes in Längsrichtung desselben erstreckt. Mittels eines Spann- oder Betätigungsorganes kann ein am Haltestift angeordnetes Festhalteorgan entlang der Nut bzw. Kulisse verschoben werden. Dabei ist vorgesehen, dass mittels des Spann- oder Betätigungsorganes das Festhalteorgan gegen das Rahmenelement oder das Plattenelement an diesem angreifend in Richtung zu einer Unterlage hin getrieben werden kann, wobei die Unterlage ein Rasterrahmen ist, welcher das Rastersystem bildet.

Am Festhalteorgan ist mindestens ein Eingriffsabschnitt vorgesehen, welcher in die Nut bzw. Kulisse eingreift. Die Nut bzw. Kulisse ist dergestalt ausgebildet, dass das Festhalteorgan beim Verschieben entlang der Nut bzw. Kulisse eine Drehbewegung in Bezug auf den Haltestift ausführt. Diese Drehbewegung ist dergestalt, dass das Festhalteorgan von einer am Rahmenelement oder der Platte angreifenden Position in eine das Rahmenelement oder die Platte freigebende Position bewegbar ist bzw. umgekehrt von einer nicht am Rahmenelement oder die Platte angreifenden Position in eine am Rahmenelement oder der Platte angreifenden Position.

Zusammenfassend geht es darum, dass durch das einfache Herunterdrücken eines Spannorganes, wie des Hebels, sich das Festhalteorgan zuerst in eine sogenannte Klemmposition dreht, bevor es das oder die Rahmenelement(e), wie Filterzellenrahmen, gegen eine Unterlage, wie den Rasterrahmen, drückt bzw. festlegt. Umgekehrt löst sich das Festhalteorgan vom Rahmen oder den Rahmen, bis keine Anpresskraft mehr vorliegt und anschliessend entlang der Kulisse bzw. Nut gedreht wird, und in eine Position gebracht wird, in welcher der oder die Rahmen freigegeben werden.

Die erfindungsgemäss vorgeschlagene Anordnung, umfassend das Rastersystem mit mehreren rasterartig angeordneten Öffnungen, weist vorzugsweise mindestens an einem Teil der Kreuzungen des Rastersystems Spann- oder Festhalteeinrichtungen auf, welche derart einstellbar sind, dass Rahmenelemente an den verschiedenen Öffnungen frei zugänglich aufgelegt bzw. angelegt werden können und dass durch Betätigen der Festlegeeinrichtungen und der dabei ausgeführten Drehbewegung der Festhalteorgane die Rahmenelemente oder Platten am Rastersystem bzw. Rasterrahmen fest positioniert bzw. angeordnet werden.

Weitere bevorzugte Ausführungsvarianten der Vorrichtung und der Anordnung sind in den abhängigen Ansprüchen charakterisiert.

Die Erfindung wird nun beispielsweise und unter Bezug auf die beigefügten Figuren näher erläutert.

Dabei zeigen:
- Fig. 1: die Befestigung einer Filterzelle, bekannt aus dem Stand der Technik,
- Fig. 2: schematisch in Perspektive die erfindungsgemässe Rasteranordnung aufweisend an einem Rasterrahmen befestigte Filterzellen,
- Fig. 3: in Obendraufsicht ausschnittsweise das Rastersystem aus Fig. 2 gesehen auf eine Festlegeeinrichtung,
- Fig. 4: die Festlegeeinrichtung von Fig. 3 in der die einzelnen Filterzellen freigebenden Position,
- Fig. 5: die Festlegeeinrichtung aus Fig. 3 und 4 im Querschnitt (entlang der Linie B-B) in der die Filterzellen festlegenden Position,
- Fig. 6: die Festlegeeinrichtung aus Fig. 5 im Schnitt in der die Filterzellen freigebenden Position,
- Fig. 7: in Perspektive den Haltestift einer Spann - oder Festlegeeinrichtung,
- Fig. 7a: den Haltestift aus Fig. 7 gesehen in Pfeilrichtung A,
- Fig. 8: das Festhalteorgan der Spann- oder Festlegeeinrichtung der Fig. 3 bis 7 in Perspektive,
- Fig. 9: das Betätigungsorgan der Spann- oder Festlegeeinrichtung der Fig. 3 bis 7 in Perspektive und
- Fig. 10: in Perspektive ein Positionierorgan für das Positionieren der Filterzellen beim Einlegen in den Rasterrahmen.

Fig. 1 zeigt in Perspektive ein Filterzellenelement 101 wie bekannt aus dem Stand der Technik. Auf einem Rasterrahmen 103 ist eine Filterzelle 105 angeordnet, wobei der Rahmen 107 der Filterzelle 105 seitlich mittels je einem Führungsprofil 113 (nur eines sichtbar) und je einem Befestigungsprofil 111 am Rasterrahmen 103 gehalten wird. Mittels je eines Spann- bzw. Betätigungshebels 115 sind die beiden Führungsprofile 113 gegen den Filterzellenrahmen 107 treibbar, womit die Filterzelle 105 fest am Rasterrahmen 103 positioniert werden kann. In der in Fig. 1 dargestellten Position der beiden Hebel 115 sind die beiden Profile 113 in angehobenem Zustand, sodass die Filterzelle 105 in Pfeilrichtung 119 frei bewegbar ist bzw. aus dem Rasterrahmen 103 entfernt werden kann. Werden die beiden Hebel 115 in Pfeilrichtung 121 nach unten abgeschwenkt, wird der Filterzellenrahmen 107 gegen Dichtungen 108 am Rasterrahmen 103 gepresst, womit die Filterzelle 105 festgepresst bzw. betriebsbereit ist. Die in Fig. 1 dargestellte Filterzelle ist beispielsweise geeignet für das Reinigen von Luft in Klimageräten. Dabei zeigt die Ansicht in Fig. 1 den Filterbereich eines Klimagerätes von der Seite der Reinluft aus gesehen.

Der Nachteil einer Filterzelle dargestellt in Fig. 1 liegt darin, dass bei mehreren nebeneinander angeordneten Filterzellen jeweils nur diejenigen im Randbereich auf einfache Art und Weise entfernt bzw. ausgewechselt werden können. In einem Rastersystem mittig angeordnete Filterzellen können mit dem in Fig. 1 dargestellten System kaum entfernt bzw. ausgewechselt werden. Zudem ist eine Umkehr der Filterzellen, d.h. dass der Filterbereich in Richtung Schmutzluft gerichtet ist, nicht möglich.

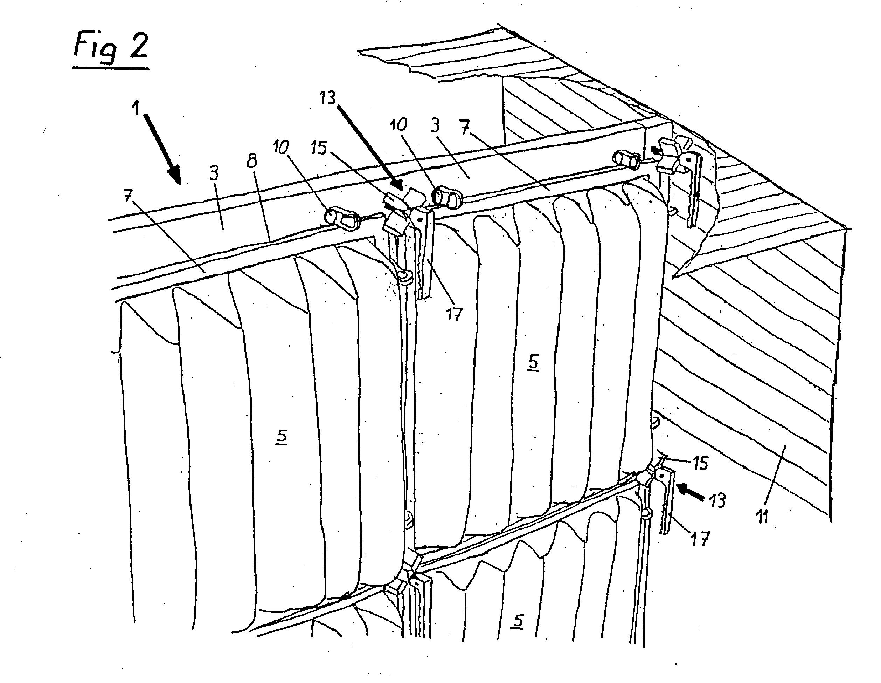

Aus diesem Grunde wird erfindungsgemäss eine Filterzellenanordnung vorgeschlagen, wie in Perspektive und schematisch in Fig. 2 dargestellt. Fig. 2 zeigt in Perspektive ausschnittsweise den Bereich einer Luftfiltrierung in einem Klimagerät, wobei andeutungsweise das den Filterraum umgebende Gehäuse 11 dargestellt ist. In diesem Filterbereich ist eine Filtrieranordnung 1 vorgesehen, für die Filtrierung der zu klimatisierenden Luft, wobei die Ansicht in der Darstellung gemäss Fig. 2 reinluftseitig gewählt ist. In einem Rasterrahmen 3 sind mehrere Filterzellen 5 angeordnet, welche in Filterzellenrahmen 7 gehalten sind. Diese Filterzellenrahmen 7 liegen auf Dichtungen 8 (nicht sichtbar) auf, um eine dichte Abtrennung der Schmutzluft von der Reinluft zu garantieren. Über seitliche Positionierorgane 10 wird sichergestellt, dass die Filterzellen 5 positionsrichtig auf den Dichtungen 8 am Rasterrahmen 3 angeordnet sind. Die einzelnen Filterzellenrahmen 7 werden mittels Spann- oder Festlegeeinrichtungen 13 fest auf dem Rasterrahmen 3 gehalten. Wie in Fig. 2 erkennbar, weisen diese Spann- oder Festlegeeinrichtungen 13 einerseits ein Festhalteorgan 15 auf, das drehkreuzartig ausgebildet ist, sowie ein Spann- bzw. Betätigungsorgan bzw. einen Spannhebel 17, mittels welchen die Spann- oder Festlegeeinrichtung betätigbar ist.

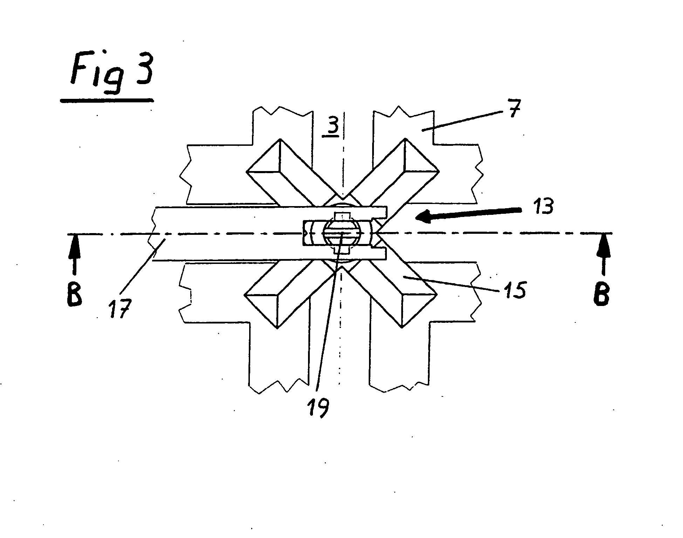

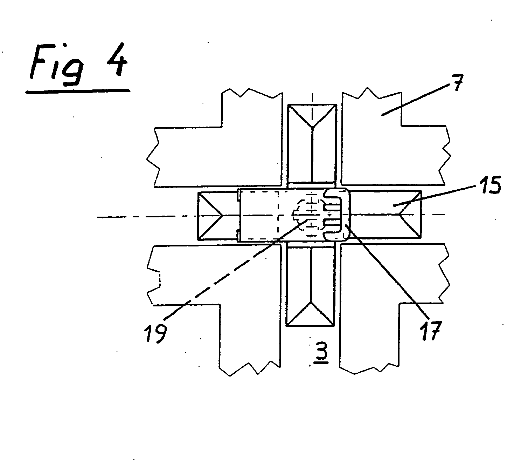

In Fig. 3 ist ausschnittsweise aus Fig. 2 eine Spann- oder Festlegeeinrichtung 13 vergrössert und in Draufsicht dargestellt. Dabei sind lediglich andeutungsweise 4 Filterzellenrahmen 7 dargestellt, welche fest auf dem Rasterrahmen 3 angeordnet sind. Dass diese Filterzellenrahmen fest mit dem Rasterrahmen 3 verbunden sind, wird durch die in Fig. 3 dargestellte Position des Spann- oder Festhalteorganes 15 sichergestellt. Bei diesem handelt es sich, wie oben erwähnt, um ein Drehkreuz, welches um eine mittige Achse bzw. um einen mittigen Haltestift 19 drehbar ist. Wiederum andeutungsweise dargestellt ist der Spannhebel 17, mittels welchem die Festlegeeinrichtung betätigbar ist. Fig. 4 zeigt die Spann-oder Festlegeeinrichtung 13 aus Fig. 3 in derjenigen Position, welche sie beim Freigeben der Filterzellenrahmen 7 einnimmt. Dies wird dadurch erreicht, indem das das Festhalteorgan 15 bildende Drehkreuz um 45° verdreht positioniert ist, verglichen zur Stellung dargestellt in Fig. 3. Dabei ist der Hebel 17 in aufgeklappter Stellung, wie besser ersichtlich aus den nachfolgenden Figuren.

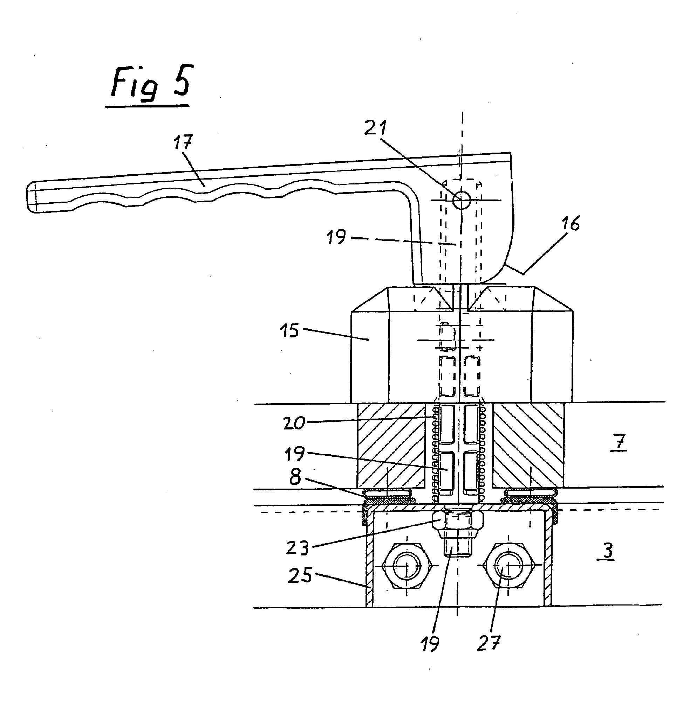

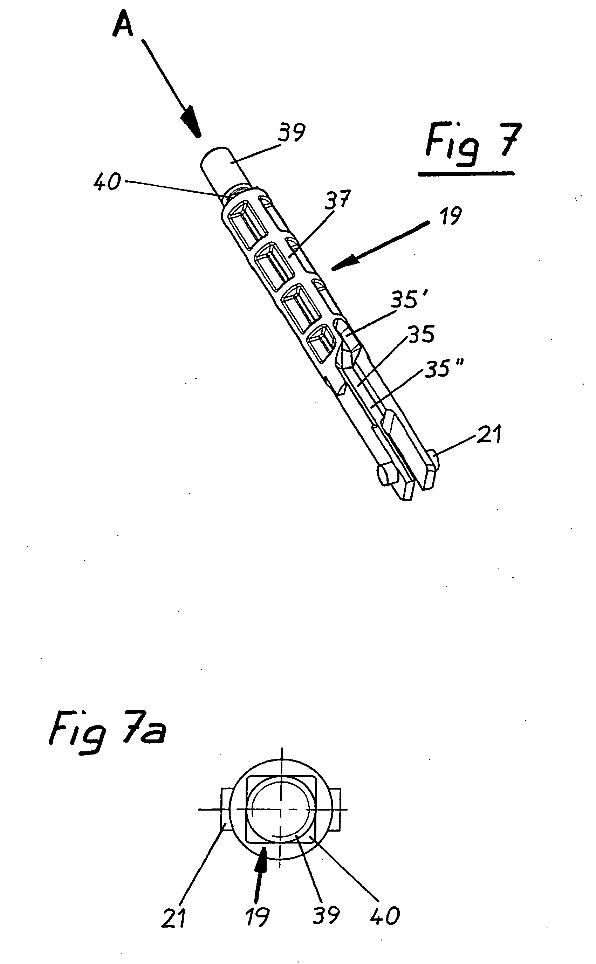

Fig. 5 zeigt wiederum die Spann- oder Festlegeeinrichtung im Schnitt entlang der Linie BB wie bezeichnet in Fig. 3. Andeutungsweise erkennbar sind die Filterzellenrahmen 7, welche über Dichtungen 8 und ggf. den Rasterrahmen 3 bildende Verstärkungsprofile 25 auf dem Rasterrahmen 3 aufliegen. Die feste Position der Filterzellenrahmen 7 wird durch die Stellung des Festhalteorganes bzw. durch die Schenkel des Drehkreuzes 15 sichergestellt, welche fest auf der äusseren Kontur der Filterzellenrahmen 7 aufliegen. Dieses feste Aufliegen wird sichergestellt durch die Stellung des Spannhebels 17, welcher sich in heruntergeklappter Stellung befindet. Der Hebel 17 ist über seitliche Schwenknocken 21 mit dem mittigen Haltestift 19 verbunden, entlang welchem das Drehkreuz 15 längsverschieblich und dabei um beispielsweise 45° drehbar gelagert ist. Auf die Art und Weise wie diese Drehung des Halteorganes 15 erfolgt, wird später unter Bezug auf Fig. 7 näher erläutert. Der Haltestift 19 seinerseits wird im Verstärkungsprofil 25 mittels beispielsweise einer Mutter 23 fest am Rasterrahmen 3 gehalten. Mehrere Verstärkungsprofile 25 ihrerseits bilden gesamthaft den Rasterrahmen 3, wobei die Verstärkungsprofile über Schraubverbindungen 27 miteinander verbunden sind. Schliesslich erkennbar ist ein Federelement 20, welches das Betätigungsorgan 15 in Richtung gegen den Spannhebel 17 vorspannt.

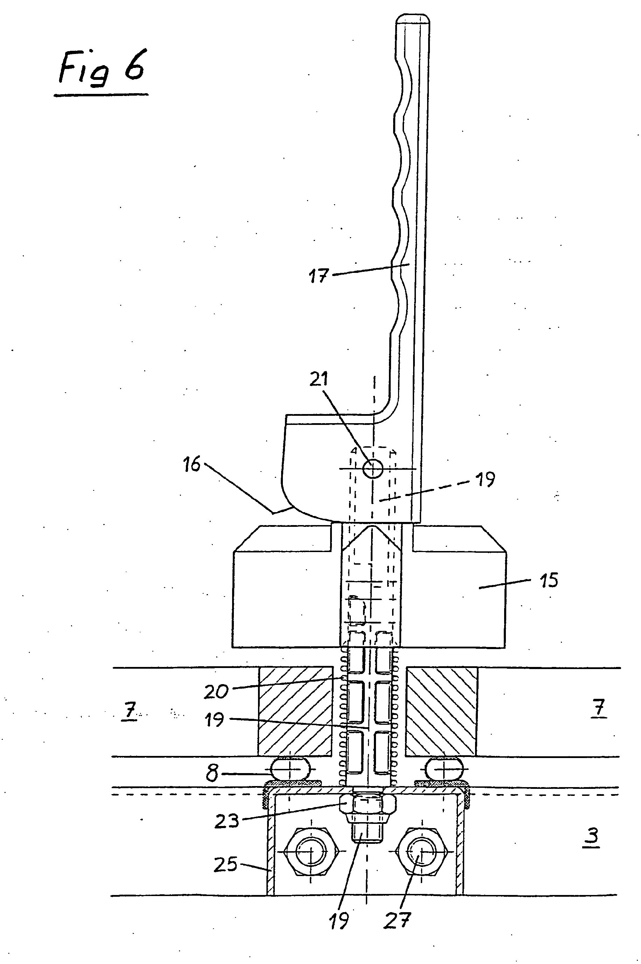

Um nun die Filterzellenrahmen 7 freizugeben, wird der Spannhebel 17 um die beiden seitlichen Schwenknocken 21 nach oben geschwenkt, wodurch als Folge der Ausgestaltung der Führungskontur 16 am Hebel 17 und durch die Feder 20 das Festhalteorgan bzw. das Drehkreuz 15 in Pfeilrichtung nach oben getrieben wird. Gleichzeitig erfolgt eine Drehbewegung um 45°, sodass nun die Filterzellen vom Rasterrahmen 3 entfernt werden können, um beispielsweise gereinigt oder ersetzt zu werden. Durch das Abheben der Filterzellenrahmen 7 ergibt sich auch eine Entspannung der Dichtungen 8, was in Fig. 6 deutlich erkennbar ist.

Anhand von Fig. 7, in welcher der mittige Haltestift vergrössert in Perspektive detailliert dargestellt ist, soll näher erläutert werden, wie die Drehbewegung des Festhalteorganes bzw. Drehkreuzes 15 ausgelöst wird. In Fig. 7 ist der Haltestift in Perspektive seitlich von oben dargestellt, wobei deutlich die beiden Schwenknocken 21 erkennbar sind, um welche der Hebel 17 schwenkbar mit dem Haltestift 19 verbunden ist. Erfindungswesentlich ist nun, dass am Haltestift 19 eine Drehnut bzw. Positionier-kulisse 35 angeordnet ist, welche sich entlang eines Abschnittes in Längsrichtung des Haltestiftes 19 derart erstreckt, dass mindestens zwei in Umfangrichtung des Haltestiftes zu einander um einen bestimmten Winkel versetzte Abschnitte gebildet werden. Diese in Fig. 7 mit 35' und 35" bezeichneten Abschnitte sind im gewählten Beispiel um ca. 45° zueinander versetzt, wobei der eingeschlossene Winkel selbstverständlich unterschiedlich gewählt werden kann. Bevorzugt ist dieser Winkel derart gewählt, dass in der einen Position das Festhalteorgan bzw. Drehkreuz die Filterzellenrahmen fest am Rasterrahmen hält und in der anderen Position diese frei gibt. Weiter am Haltestift 19 erkennbar sind Verstärkungsrippen 37 sowie am unteren Ende eine beispielsweise quadratische Kontur 40, um ein verdrehsicheres Positionieren des Haltestiftes 19 beispielsweise in der Verstärkung bzw. im Rasterrahmen 3 zu gewährleisten. Schliesslich, kaum erkennbar, ist ein Gewinde 39, welches für das Befestigen mittels der Mutter 23 vorgesehen ist.

In Fig. 7a ist der Haltestift 19 in Draufsicht von unten in Pfeilrichtung A dargestellt, wobei deutlich die Kontur 40 erkennbar ist, welche ein verdrehsicheres Anordnen des Haltestiftes 19 auf der Unterlage wie beispielsweise dem den Rahmen 3 bildenden Verstärkungsprofil 25 garantieren soll.

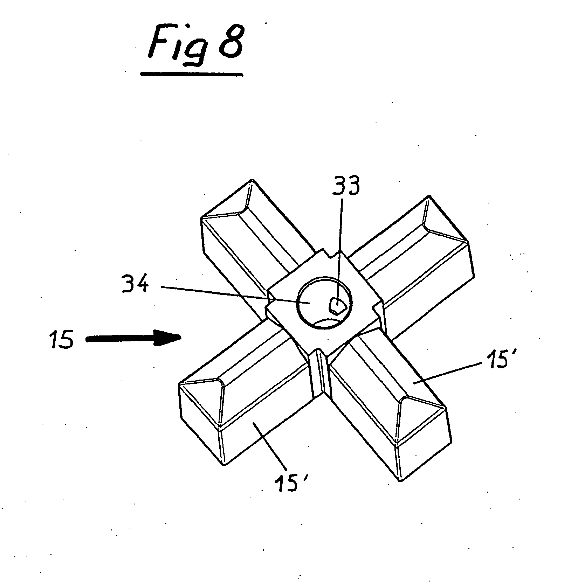

Fig. 8 zeigt wiederum in Perspektive das Festhalteorgan 15 mit den einzelnen Schenkel 15', welche dazu vorgesehen sind, die Filterzellenrahmen 7 fest auf dem Rasterrahmen 3 anzuordnen bzw. zu halten. Für die Aufnahme des Haltestiftes ist eine mittige Öffnung 34 angeordnet, in welcher Öffnung ein nach innen vorstehender Nocken 33 sichtbar ist, welcher dazu vorgesehen ist, in der Drehnut bzw. Positionskulisse 35 aus Fig. 7 einzugreifen.

Wenn nun das Festhalteorgan bzw. Drehkreuz 15 mittels dem Spann- bzw. Betätigungshebel 17 gegen den Rasterrahmen 3 zum Spannen bzw. Befestigen der Filterzellenrahmen 7 bewegt wird, wird durch Eingriff der Nocken 33 in der Drehnut bzw. Positionskulisse 35 das Drehkreuz 15 um 45° gedreht, sodass die einzelnen Schenkel 15' in den Eckbereichen der Filterzellenrahmen 7 aufliegen und diese fest gegen den darunter angeordneten Rasterrahmen 3 bzw. die dazwischen angeordneten Dichtungen 8 spannen bzw. pressen. Bei Freigabe des Drehkreuzes 15 durch Aufschwenken des Hebels 17 wird in Folge der Kraft durch die Feder 20 das Festhalteorgan 15 vom Rasterrahmen 3weggetrieben und erneut führt das Drehkreuz 15 eine Drehbewegung um 45° aus, wodurch die Position der Schenkel 15' derart ist, dass die einzelnen Filterzellen 5 vom Rahmen 3 abgehoben werden können.

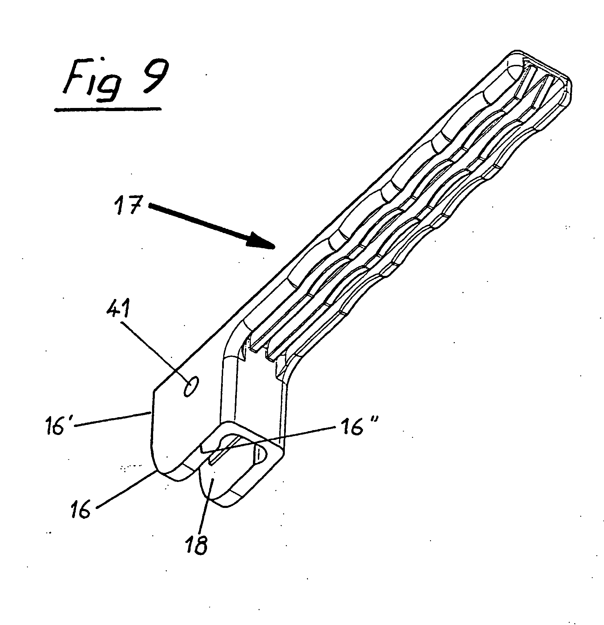

In Fig. 9 ist ein Spann- bzw. Betätigungshebel 17 in Perspektive schematisch dargestellt, wobei Öffnungen 41 erkennbar sind, für das Eingreifen der Nocken 21 des Haltestiftes 19. Der Haltestift 19 verläuft dabei durch eine schlitzartige Öffnung 18 des Hebels 17. Die am Spann- bzw. Betätigungshebel 17 frontseitig ausgebildete Bewegungskontur 16 ist derart ausgebildet, dass ein unterschiedlicher Abstand der beiden Auflagekonturen 16 und 16' von der Öffnung 41 entsteht, welche unterschiedlichen Abstände dafür verantwortlich sind, dass einerseits das Festhalteorgan 15 gegen den Rasterrahmen 3 getrieben wird bzw. umgekehrt das Festhalteorgan bzw. Drehkreuz 15 vom Rasterrahmen 3 wegbewegbar ist.

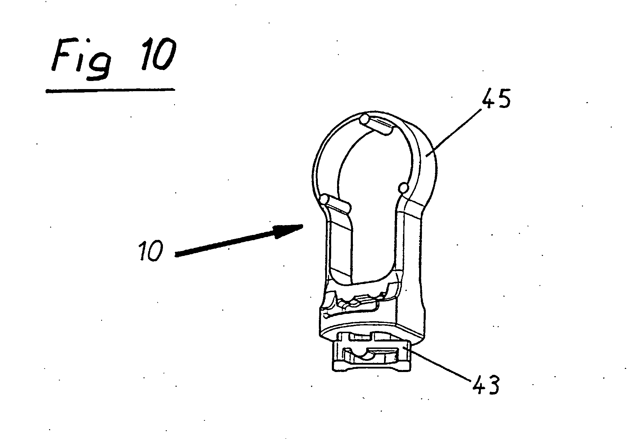

Fig. 10 schliesslich zeigt schematisch in Perspektive ein Positionsorgan 10, wie bekannt aus der Darstellung gemäss Fig. 2. Dieses Positionsorgan 10 umfasst einerseits am Boden eine Festlegekontur 43, um das Positionsorgan 10 entsprechend in einer Rasterrahmenstrebe einführen und befestigen zu können. Entgegengesetzt zur Festhaltekontur 43 ist eine vorzugsweise flexible Positionierkontur 45 vorgesehen, welche dazu vorgesehen ist, den Filterzellenrahmen 7 beim Einsetzen in den Rasterrahmen 3 positionsrichtig zu platzieren. Beim Einführen der Filterzelle 3 wird der Positionsbereich 45 leicht deformiert, sodass schliesslich die Filterzelle 5 nach Einlegen im Rasterrahmen 3 durch diese Kontur provisorisch festgehalten wird und nicht mehr wegkippen kann. Dies ist vor allem dann wichtig, wenn der Raster vertikal angeordnet ist und entsprechend die Filterzellen 5 seitlich auf den Rasterrahmen 3 aufgesteckt werden.

Bei den in den Figuren 2 - 10 dargestellten Spann- oder Festhalteeinrichtungen, Befestigungsorgane, Filterzellen, Raster für das Anordnen von Filterzellen oder Plattenelementen, etc. handelt es sich selbstverständlich nur um Beispiele, die geeignet sind, die vorliegende Erfindung näher zu erläutern. Keinesfalls ist die vorliegende Erfindung auf die Ausführungsbeispiele dargestellt in den Figuren 2 - 10 eingeschränkt. So ist es selbstverständlich auch denkbar, die erfindungsgemäss beschriebene Festlegeeinrichtung für das Positionieren und Befestigen irgendeines Rahmenelementes oder Plattenelementes zu verwenden, wie beispielsweise eines Moskitogitters, von speziellen Fenstereinlagen, von Schallelementen, von Einlageplatten, etc. Auch die für die Herstellung der verschiedenen Elemente verwendeten Materialen sind an sich unerheblich. So ist es beispielsweise möglich, den Haltestift der Spann- oder Festlegeeinrichtung aus Metall wie beispielsweise rostfreiem Stahl, Aluminium oder aus einem polymeren Material wie beispielsweise einem verstärkten Polyamid, Polypropylen, etc. herzustellen. Auch die übrigen Teile der Festlegeeinrichtung können aus einem metallenen oder einem polymeren Material gefertigt sein. Für den Rahmen wiederum geeignet sind metallene Werkstoffe, Holz, polymere Werkstoffe etc. Bei der Dichtung für das Abdichten der Rahmenelemente gegenüber dem Rasterrahmen werden bevorzugt elastomere Materialien wie beispielsweise Gummi, Elastomerpolymere, etc. verwendet.

Weiter ist es selbstverständlich auch möglich, die im Haltestift angeordnete Drehnut bzw. Positionskulisse andersartig auszubilden, sodass beispielsweise eine Rotation des Festhalteorganes um mehr als 45° bewirkt wird, wie beispielsweise eine Rotation um 60°, 135° etc. Auch müssen die einzelnen Rahmenelemente nicht zwingend quadratisch bzw. rechteckig ausgebildet sein, so ist es durchaus auch möglich, dreieckige, sechseckige oder andersartig ausgebildete Rahmenelemente oder Platten mittels einem erfindungsgemäss ausgebildeten Festlegeorgan zu befestigen.

## Patentansprüche

1. Vorrichtung zum Positionieren und Befestigen oder Spannen eines Rahmenelementes (7), welches Rahmenelement ein Funktionselement wie einen Filter (5), ein Gitter oder dergleichen aussen umgibt oder eines Plattenelementes, auf einer Unterlage (3), **gekennzeichnet durch** mindestens eine Spann- oder Festlegeeinrichtung (13), bestehend aus einem zentralen Haltestift (19) welcher mindestens eine Drehnut oder eine Positionierkulisse (35) aufweist, welche sich entlang eines Abschnittes des Haltestiftes in Längsrichtung desselben erstreckt und welcher Haltestift mittels Befestigungsmittel (23) drehfest mit der Unterlage (3) verbindbar ist, aus einem entlang der Nut bzw. Kulisse drehbeweglich verschiebbaren Festhalteorgan (15) sowie aus einem Spann- oder Betätigungsorgan (17) , um beim Einsatz, wenn der Haltestift (19) mittels der Befestigungsmittel (23) drehfest mit der Unterlage verbunden ist, **durch** Betätigung des Spann- oder Betätigungsorgans (17) das Festhalteorgan (15) zum Befestigen des Rahmens (7) oder der Platte auf der Unterlage (3), wie einem eine Öffnung umgebenden Rasterrahmen (3), über die Drehnut oder Positionierkulisse in eine Klemmposition zu verdrehen und gegen das Rahmen- oder Plattenelement (7) an diesem angreifend in Richtung zur Unterlage (3) hin zu treiben.

2. Vorrichtung nach Anspruch 1, **dadurch gekennzeichnet, dass** am Festhalteorgan (15) mindestens ein Eingriffabschnitt (33) vorgesehen ist, um in der Nut bzw. Kulisse (35) einzugreifen und dass die Nut bzw. Kulisse dergestalt ausgebildet ist, dass das Festhalteorgan (15) bei Verschieben entlang der Nut bzw. Kulisse eine Drehbewegung in Bezug auf den Haltestift (19) ausführt.

3. Vorrichtung nach einem der Ansprüche 1 oder 2, **dadurch gekennzeichnet, dass** die Drehbewegung dergestalt ist, dass das Festhalteorgan (15) von einer am Rahmen- oder Plattenelement (7) angreifenden bzw. auf diesem aufliegenden Position in eine das Rahmen- oder Plattenelement (7) freigebenden Position bewegbar ist.

4. Vorrichtung nach einem der Ansprüche 1 bis 3, **dadurch gekennzeichnet, dass** das Festhalteorgan (15) drehkreuzartig ausgebildet ist mit einer zentralen Öffnung (34), durch welche hindurch sich der Haltestift (19) erstreckt und dass die Drehbewegung dergestalt ist, dass mindestens ein Schenkel (15') des Drehkreuzes (15) an einem Rahmen- oder Plattenelement (7) bei Festlegen der Position an- bzw. aufliegt und dass bei Freigeben der Position der Schenkel (15') des Drehkreuzes (15) vom Rahmen- oder Plattenelement (7) wegbewegt ist.

5. Anordnung zum Positionieren und Befestigen eines oder mehrerer Rahmenelemente (7), welche ein Funktionselement (5) aussen umgeben oder von Plattenelementen an bzw. in einem Rasterrahmen (3) aufweisend mindestens ein vorzugsweise rechteckiges oder quadratisches Rastersystem, bildend den Rasterrahmen (3), geeignet für die Aufnahme bzw. das Anordnen mehrerer Rahmen- oder Plattenelemente (7) in oder an einzelnen Rasterzellen des Systems, **dadurch gekennzeichnet, dass** in den Kreuzungen des Rastersystemes bzw. Rasterrahmens (3) Spann- oder Festlegeeinrichtungen (13) gemäß der Ansprüche 1-4 für das Befestigen der Rahmen- oder Plattenelemente (7) drehfest angeordnet sind.

6. Anordnung nach Anspruch 5, **dadurch gekennzeichnet, dass** an bzw. in den Streben des Rasterrahmens (3) Positionierorgane (10) vorgesehen sind, um beim Anordnen der Rahmenelemente (7) im bzw. am Rasterrahmen (3) diese zu positionieren und provisorisch zu halten, sodass ein Wegschwenken der Rahmen- oder Plattenelemente (7) verhindert wird.

7. Anordnung nach einem der Ansprüche 5 oder 6, **dadurch gekennzeichnet, dass** die Haltestifte (19) der Spann- oder Festlegeeinrichtung (13) mindestens in einem Teil der Kreuzungen des Rastersystems bzw. Rasterrahmens (3) eingelassen befestigt sind und senkrecht von diesem vorstehen.

8. Anordnung nach einem der Ansprüche 5 bis 7, **dadurch gekennzeichnet, dass** das Betätigungsorgan (17) hebelartig ausgebildet ist, derart, dass mittels Schwenkbewegung des Spannhebels (17) das Festhalteorgan (15) wie ein Drehkreuz (15) in die Halteposition verdrehbar und gegen den Rasterrahmen (3) bzw. vom Rasterrahmen (3) him bewegbar ist.

9. Anordnung nach einem der Ansprüche 5 bis 8, **dadurch gekennzeichnet, dass** zwischen Rasterrahmen (3) und Spann-oder Betätigungsorgan (17), wie einem Spannhebel, ein Federelement (20) angeordnet ist, um das Festhalteorgan (15) gegen das Spann- oder Betätigungsorgan (17) hin vorzuspannen.

10. Filterzellenrastersystem mit einer Vorrichtung nach einem der Ansprüche 1 bis 4 und/oder einer Anordnung nach einem der Ansprüche 5 bis 9.

11. Verwendung der Vorrichtung nach einem der Ansprüche 1 bis 4 oder einer Anordnung nach einem der Ansprüche 5 bis 9 zum Positionieren und Befestigen bzw. Spannen von Filterzellen, Moskitogittern, Schallelementen, Scheiben- oder Glaselementen, Isolationsplatten oder dergleichen.

12. Verfahren zum Positionieren, Befestigen und Spannen eines Rahmenelementes (7) wie einer Filterzelle an einer Unterlage (3), wie einem Filterzellenrastersystem mittels einer Anordnung nach einem der Ansprüche 6 bis 9, **dadurch gekennzeichnet, dass** einzelne Filterzellen (5) auf einem Rasterrahmen (3) aufgesteckt und mittels der Positionsorgane (10) positioniert und provisorisch festgehalten werden, anschliessend mittels mindestens einer Spann- oder Festlegeeinrichtung (13) die Filterzellen bzw. die die Zellen umgebenden Filterzellenrahmen im Eckbereich durch Betätigen der Spann- oder Festlegeeinrichtungen (13) fest am Rahmen befestigt werden, wobei durch Betätigen bzw. Herunterdrücken des Spann- oder Betätigungsorganes (17) das Festhalteorgan (15) entlang einer Positionierkulisse (35) des fest mit der Unterlage verbundenen Haltestiftes (19) zunächst in eine Klemmposition gedreht wird, bevor es den oder die Filterzellenrahmen gegen die Unterlage (3), wie den Rasterrahmen drückt und festlegt, und dass umgekehrt das Festhalteorgan vom Rahmen bzw. von den Rahmen durch umgekehrtes Betätigen des Spann- oder Betätigungsorganes (17) gelöst wird, bis keine Anpresskraft mehr vorliegt und anschliessend das Festhalteorgan entlang einer Drehnut bzw. Positionskulisse (35) gedreht wird, und in eine Position schwenkt, in welcher der oder die Rahmen freigegeben werden.

13. Verfahren nach Anspruch 12, **dadurch gekennzeichnet, dass** das Befestigen derart erfolgt, dass nach dem provisorischen Anordnen der Filterzellen mittels eines Spann- oder Betätigungsorganes wie eines Hebels (17) ein Festhalteorgan, welches vorzugsweise drehkreuzartig ausgebildet ist, entlang eines Haltestiftes gegen den Rasterrahmen getrieben wird, wobei das Festhalteorgan durch Eingriff in die mindestens eine Drehnut bzw. Positionskulisse entlang des Haltestiftes um einen bestimmten Drehwinkel gedreht wird, sodass die Schenkel (15') des Festhalteorganes wie eines Drehkreuzes in den Eckbereichen der Filterzellenrahmen aufliegen und diese gegen den Rasterrahmen treiben, um die Filterzelle am Rasterrahmen festzulegen bzw. zu spannen.

14. Verfahren nach einem der Ansprüche 12 bis 13, **dadurch gekennzeichnet, dass** mittels einer Spann- oder Festlegeeinrichtung gleichzeitig mindestens zwei, vorzugsweise vier Filterzellenrahmen in deren Eckbereichen festgelegt bzw. gespannt werden.

## Claims

1. Apparatus for positioning and fastening or clamping of a frame element (7) which frame element externally surrounds a function component such as a filter (5), a grating or the like, or a plate element on a support (3), **characterised by** at least one clamping or fastening device (13) consisting out of a central fixing pin (19) which comprises at least one twist nut or a positioning crank (35), which extends along a section of the fixing pin in length direction of the same and which fixing pin is torque proof connectable by means of fastening means (23) with the support (3), out of a fastening element (15) which is rotatably movable along the nut or crank respectively as well as out of a clamping or actuating element (17), for, at operation, when the fixing pin (19) by means of the fastening means (23) is torque proof connected with the support, by actuating of the clamping or actuating element (17) to twist the fastening element (15) for fastening of the frame (7) or the plate on the support (3) such as a pattern frame (3) surrounding an opening over the twist nut or positioning crank into a clamping position and to force the frame or plate element (7) by engaging at the same in direction to the support (3).

2. Apparatus according claim 1, **characterised in that** at the fastening element (15) at least one engaging section (33) is provided to engage into the nut or crank (35) respectively and that the nut or crank is designed such, that the fastening element (15) at moving along the nut or crank respectively is executing a twist movement in relation to the fixing pin (19).

3. Apparatus according to one of the claims 1 or 2, **characterised in that** the twisting movement is such, that the fastening element (15) is movable from a frame or plate element (7) contacting or overlying position into a the frame or plate element (7) releasing position.

4. Apparatus according to one of the claims 1 to 3, **characterised in that** the fastening element (15) is designed star handle like with a central opening (34) through which extends the fixing pin (19) and **in that** the twisting movement is such, that at least a shank (15') of the star handle (15) abuts on or overlies the frame or plate element (7) at defining of the position and **in that** at releasing of the position the shank (15') of the star handle (15) is moved away from the frame or plate element (7).

5. Arrangement for positioning and fastening of one or a plurality of frame elements (7) which are externally surrounding a function element (5) or of plate elements at or in a pattern frame (3) comprising at least one preferably rectangular or quadratic pattern system constituting the pattern frame (3) suitable for receiving or arranging a plurality of frame or plate elements (7) in or at individual pattern units of the system, **characterised in that** within the crossings of the pattern system or pattern frame (3) respectively clamping or fastening devices (13) according to one of the claims 1 to 4 for fastening of the frame or plate elements (7) are torque proof arranged.

6. Arrangement according to claim 5, **characterised in that** at or in the crossbars of the pattern frame (3) positioning elements (10) are provided for at arranging the frame elements (7) in or at the pattern frame (3) to position the frame elements and to provisionally hold them, so that pivoting away of the frame or plate elements (7) is prevented.

7. Arrangement according to one of the claims 5 or 6, **characterised in that** the fixing pins (19) of the clamping or fastening device (13) are at least in a part of the crossings of the pattern system or pattern frame (3) insertibly fastened and protruding in perpendicular direction from those crossings.

8. Arrangement according to one of the claims 5 to 7, **characterised in that** the actuating element (17) is designed lever-like such, that by means of a swing movement of the fastening lever (17) the fastening element (15) such as a star handle (15) is twistable into the holding position and movable against the pattern frame (3) or from the pattern frame (3) respectively.

9. Arrangement according to one of the claims 5 to 8, **characterised in that** between the pattern frame (3) and the clamping or actuating element (17) such as a fastening lever a spring element (20) is arranged to prestress the fastening element (15) against the clamping or actuating element (17).

10. Filter segment pattern system with an apparatus according to one of the claims 1 to 4 and/or an arrangement according to one of the claims 5 to 9.

11. Use of the apparatus according to one of the claims 1 to 4 or an arrangement according to one of the claims 5 to 9 for positioning and fastening or clamping respectively of filter segments, mosquito gratings, sound elements, window or glass elements, insulating plates or the like.

12. Process for positioning, fastening or clamping of a frame element (7) such as a filter segment at a support (3) such as a filter segment pattern system by means of an arrangement according to one of the claims 6 to 9, **characterised in that** individual filter segments (5) are arranged on a pattern frame (3) and positioned by means of the positioning elements (10) and provisionally fastened, afterwards by means of at least one clamping or fastening device (13) the filter segments or the filter cell frames, surrounding the segments are positioned firmly at the frame by actuating the clamping or fastening device (13) in the edge area, whereas by actuating or pressing of the clamping or actuating element (17) the fastening element (15) is first twisted in a clamping position along the positioning crank (35) of the fixing pin (19) which is firmly connected to the support before it presses and is positioning the filter cell frame or the filter cell frames against the support (3) as the pattern frame and that in turn the fastening element is released from the frame or from the frames by inverse actuating the clamping or actuating element (17) until no press force is present anymore and afterwards the fastening element is twisted along a twist nut or a positioning crank (35) and is pivoted in a position, in which the frame or the frames are released.

13. Process according claim 12, **characterised in that** the fastening is executed such, that after the provisionally arrangement of the filter element by means of a clamping or actuating element such as a lever (17) a fastening element, which preferably is designed in a star handle like manner is forced along a fixing pin against the pattern frame whereas the fastening element by engagement into the at least one twist nut or positioning crank along the fixing pin is twisted around a certain twisting angle, so that the shanks (15') of the fastening element such as a star handle are abutting in the edge sections of the filter cell frames and are forcing the frames against the pattern frame to position or to fasten the filter segments at the pattern frame.

14. Process according to one of the claims 12 or 13, **characterised in that** by means of a clamping or fastening device at the same time at least two, preferably four filter cell frames are positioned or fastened in their edge sections.

## Revendications

1. Installation pour positionner et fixer ou serrer un cadre (7) entourant extérieurement un élément fonctionnel, comme un filtre (5), une trame ou similaire, ou une plaque sur un support (3), **caractérisée par** au moins un dispositif de serrage, ou de positionnement (13), se composant d'un goujon de fixation central (19) présentant au moins une rainure de pivotement ou une coulisse de positionnement (35) qui s'étend en direction longitudinal le long d'une section du goujon de fixation, ce goujon de fixation pouvant être raccordé de manière résistant à la torsion audit support (3) au moyen d'éléments de fixation (23), d'un organe de retenu (15) déplaçable le long de ladite rainure ou coulisse tout en pouvant être pivoté et d'un organe de serrage ou d'actionnement (17) pour ceci en opération lorsque le goujon de fixation (19) est raccordé de manière résistant à la torsion par lesdits éléments de fixation (23) au support, par actionnement de l'organe de serrage ou d'actionnement (17), faire tourner l'organe de retenu (15) à l'aide de la rainure de pivotement ou de la coulisse de positionnement en une position de serrage ou avancer l'organe de retenu (15) tout en s'attaquant au cadre ou à la plaque (7), en direction dudit support (3), pour ainsi fixer le cadre (7) ou la plaque sur le support, comme sur une trame (3) entourant une ouverture.

2. Installation selon 1a revendication 1, **caractérisée en ce qu'**au moins une section d'engagement (33) est prévue sur l'organe de retenu (15), pour pouvoir s'engager dans ladite rainure ou coulisse (35) et **en ce que** la rainure ou coulisse est formée de manière telle que l'organe de retenu (15), lorsqu'il est déplacé le long de la rainure ou coulisse exécute un mouvement de rotation par rapport au goujon de fixation (19).

3. Installation selon l'une des revendications 1 ou 2, **caractérisée en ce que** le mouvement de rotation est tel que l'organe de retenu (15) est déplaçable d'une position attaquant le cadre ou la plaque (7) ou reposant sur cet élément dans une position dans laquelle il relâche le cadre ou la plaque (7).

4. Installation selon l'une des revendications 1 à 3, **caractérisée en ce que** l'organe de retenu (15) présente la forme d'un tourniquet avec une ouverture centrale (34) à travers laquelle s'étend le goujon de fixation (19), le mouvement de rotation étant tel qu'au moins une aile (15') du tourniquet (15) repose lors de la détermination de la position sur un cadre ou une plaque et **en ce que** lors de la libération de la position ladite aile (15') du tourniquet (15) est déplacée en s'éloignant du cadre ou de la plaque (7).

5. Arrangement pour positionner et fixer un ou plusieurs cadres (7) entourant extérieurement un élément fonctionnel (5) ou des plaques sur ou respectivement dans une trame (3) comprenant au moins un système de trame de préférence rectangulaire ou quadratique et formant ladite trame (3), apte pour la réception ou l'arrangement de plusieurs cadres ou plaques (7) dans ou sur des cellules de trame individuelles du système, **caractérisée en ce que** dans les croisements du système de trame ou de la trame (3) sont arrangées de façon résistant à la torsion des installations de serrage ou de positionnement (13) selon les revendications 1 - 4 pour fixer lesdits cadres ou plaques (7).

6. Arrangement selon la revendication 5, **caractérisé par** des organes de positionnement (10) prévus sur les jambes de la trame (3), pour positionner et fixer provisoirement les cadres (7) lors de leur placement sur la trame (3), ceci pour empêcher un éloignement par pivotement desdits cadres ou plaques (7).

7. Arrangement selon l'une des revendications 5 ou 6, **caractérisé en ce que** les goujons de fixation (19) de l'installation de serrage ou de positionnement (13) sont fixés par emboîtement au moins dans une partie des croisements du système de trame ou de la trame (3) et s'en projètent à angle droit.

8. Arrangement selon l'une des revendications 5 à 7, **caractérisé en ce que** l'organe d'actionnement (17) est du type levier, tel que par un mouvement de pivotement du levier de serrage (17) l'organe de fixation (15) est pivotable comme un tourniquet (15) dans la position de fixation et est déplaçable contre la trame (3) ou en s'éloignant de la trame (3).

9. Arrangement selon l'une des revendications 5 à 8, **caractérisé par** un élément ressort (20) disposé entre la trame (3) et l'organe de serrage ou d'actionnement (17), comme par exemple un levier de serrage, pour précontraindre l'organe de fixation (15) en direction de l'organe de serrage ou d'actionnement (17).

10. Système de trame à cadres de filtres avec une installation selon l'une des revendications 1 à 4 et/ou un arrangement selon l'une des revendications 5 à 9.

11. Utilisation de l'installation selon l'une des revendications 1 à 4 ou d'un arrangement selon l'une des revendications 5 à 9 pour positionner et fixer ou serrer des cadres de filtres, des moustiquaires, des éléments à absorption acoustique, des éléments en verre et des vitres, des plaques isolantes et similaires.

12. Procédé pour positionner, fixer et serrer un cadre (7), comme un cadre de filtres, sur un support (3), comme un système de trame à cadres de filtres, à l'aide d'un arrangement selon l'une des revendications 6 à 9, **caractérisé par** le montage de cellules filtres (5) individuelles sur une trame (3) et leur positionnement et fixation provisoire à l'aide des organes de positionnement (10), suivi de la fixation définitive des cellules filtres ou des cadres entourant les cellules dans les zones des angles à l'aide d'au moins une installation de serrage ou de positionnement (13), l'organe de fixation (15) étant pivoté d'abord dans une position de serrage le long d'une coulisse de positionnement du goujon de fixation (19) qui est relié fixe avec le support avant de presser et positionner le cadre à cellules de filtres contre le support (3), comme contre la trame, et en ce que inversement l'organe de fixation est détaché du cadre ou des cadres par actionnement inverse de l'organe de serrage ou d'actionnement (17), jusqu'à ce que tout force de pression aie cessée et qu'ensuite l'organe de fixation soit pivoté le long d'une rainure de pivotement ou d'une coulisse de positionnement (35) pour atteindre une position dans laquelle le ou les cadres soient libérés.

13. Procédé selon la revendication 12, **caractérisé en ce que** la fixation se fait de manière à ce que, après l'arrangement provisoire des cellules de filtre à l'aide d'un organe de serrage ou d'actionnement, comme un levier (17), un organe de retenu, de préférence sous forme d'un tourniquet, soit forcé le long d'un goujon de fixation contre la trame, l'organe de fixation, par engagement dans au moins une rainure de pivotement ou une coulisse de positionnement le long du goujon de fixation, soit pivoté d'un angle de pivotement prédéterminé, de telle façon à ce que les jambes (15') de l'organe de fixation, comme d'un tourniquet, s'appuient sur les zones d'angle du cadre à cellules de filtres pour les presser contre la trame, pour positionner et fixer ou serrer la cellule de filtre contre la trame.

14. Procédé selon l'une des revendications 12 à 13, **caractérisé en ce qu'**une installation de serrage ou de fixation sert à fixer ou serrer simultanément au moins deux, de préférence quatre cadres à cellules de filtre par leurs zones d'angles.
